# EUROPÄISCHE PATENTSCHRIFT

(11) **EP 2 208 036 B1**
(45) Veröffentlichungstag und Bekanntmachung des Hinweises auf die Patenterteilung: **16.01.2013**
(21) Anmeldenummer: 08785806.4
(22) Anmeldetag: 04.09.2008
(51) Int. Cl.: G01L 21/12, G01L 19/06

(54) **WÄRMELEITUNGS-GASDRUCKMESSANORDNUNG**
HEAT CONDUCTING GAS PRESSURE MEASUREMENT ARRANGEMENT
DISPOSITIF DE MESURE DE PRESSION DE GAZ PAR CONDUCTION THERMIQUE

(30) Priorität: 09.11.2007 DE 102007053944
(43) Veröffentlichungstag der Anmeldung: 21.07.2010
(73) Patentinhaber: VACUUBRAND GMBH + CO KG, 97877 Wertheim (DE)
(72) Erfinder: DIRSCHERL, Jürgen, 97892 Kreuzwertheim (DE); DUNIN VON PRZYCHOWSKI, Michael, 97877 Wertheim (DE); GITMANS, Frank, 30900 Wedemark (DE); LACHENMANN, Rudolf, 97877 Wertheim (DE)
(74) Vertreter: Von Rohr
(86) Internationale Anmeldenummer: PCT/EP2008/007207
(87) Internationale Veröffentlichungsnummer: WO 2009/059654

(56) Entgegenhaltungen:
- DE-A1- 2 247 988
- DE-C- 952 033
- GB-A- 539 565
- US-A- 1 768 415
- US-A- 4 812 801
- PUERS R ET AL: "The NanoPirani-an extremely miniaturized pressure sensor fabricated by focused ion beam rapid prototyping" SENSORS AND ACTUATORS A, ELSEVIER SEQUOIA S.A., LAUSANNE, CH, Bd. 97-98, 1. April 2002 (2002-04-01), Seiten 208-214, XP004361604 ISSN: 0924-4247

## Beschreibung

Die Erfindung betrifft eine Wärmeleitungs-Gasdruckmeßanordnung mit den Merkmalen des Oberbegriffs von Anspruch 1.

Gasdruckmeßanordnungen, häufig auch als Vakuummeßgeräte bezeichnet, die nach dem Wärmeleitungsprinzip (Pirani-Prinzip) arbeiten, sind seit langem bekannt. Eine ausführliche Darstellung der physikalischen Umstände bei einer solchen Wärmeleitungs-Gasdruckmeßanordnung findet sich in der DE 698 03 147 T2, auf deren Offenbarungsgehalt zu Erläuterungszwecken hier insgesamt verwiesen werden darf.

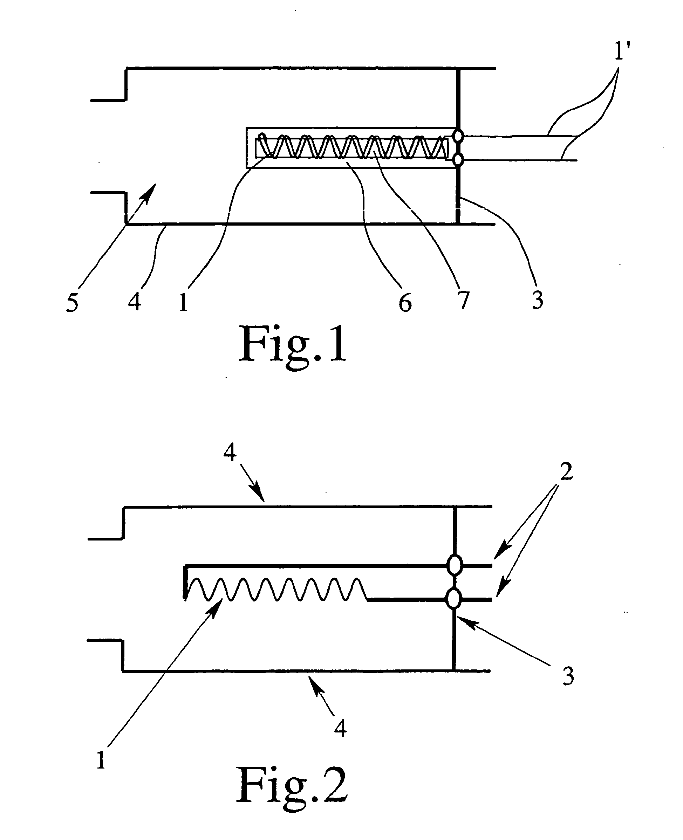

Fig. 2 zeigt den grundsätzlichen Aufbau einer klassischen Wärmeleitungs-Gasdruckmeßanordnung. Ein kombiniertes elektrisches Heiz-/-Meßelement I, in der erläuterten Weise üblicherweise ein dünner Heizfaden bzw. Heizdraht, wird mit Hilfe von elektrisch leitenden, meist aus Metall bestehenden Haltern 2 aufgespannt und gehalten. Die Halter 2 finden sich an einem mechanisch stabilen, strukturgebenden Bauteil 3, in Fig. 2 einer Grundplatte, das Teil beispielsweise eines Gehäuses 4 ist. Das Gehäuse 4 bildet eine umlaufende Wand in näherungsweise konstantem Abstand zum kombinierten Heiz-/Meßelement 1. Das Gas, dessen Druck gemessen werden soll, befindet sich im Bereich zwischen dem kombinierten Heiz-/Meßelement 1 und der vom Gehäuse 4 gebildeten Wand. Die Wärmeabfuhr durch die Halter 2 in die Grundplatte 3 begrenzt die Auflösung dieser Meßanordnung im unteren Druckbereich. Zur Kompensation von Temperaturschwankungen kann im Bereich der vom Gehäuse 4 gebildeten Wand oder im Bereich der Grundplatte 3 ein Temperatursensor angebracht sein. Der Temperatursensor kann selbst wieder ein temperaturabhängiger Widerstand sein. Typischerweise wird eine solche Anordnung in eine Wheatstone'sche Brückenschaltung integriert (WO-A-2006/010884).

Die nachfolgend gemachten Angaben gelten in ähnlicher Weise, wenn ein Heizelement und ein davon getrenntes Meßelement vorgesehen sind und somit die Temperatur separat durch das Meßelement bestimmt wird. Wenn im übrigen nachfolgend der Begriff "Heizfaden" verwendet wird, so steht dies für das elektrisch leitende Heizelement unabhängig davon, ob es als hauchdünner Metalldraht oder als dünne leitende Schicht ausgeführt ist.

Beim Einsatz von Wärmeleitungs-Gasdnickmeßanordnungen der beschriebenen Art in aggressiven Gasen oder Dämpfen kann es zu einer Änderung der Eigenschaften des Heizfadens kommen. Häufig wird der Faden selbst angegriffen, wodurch dieser dünner wird und sein Widerstand zunimmt. Dadurch wird die Kennlinie geändert und das System zeigt falsche Werte an.

Bei der weiter oben erwähnten, bekannten Wärmeleitungs-Gasdruckmeßanordnung (WO-A-2006/010884) ist die chemische Beständigkeit gegenüber aggressiven Medien durch eine geeignete Werkstoffauswahl erhöht worden. Diese Veröffentlichung gibt Ausführungsbeispiele für verschiedene Materialien und Materialkombinationen. So wird eine Goldbeschichtung eines Wolfram-Fadens häufig verwendet, um die chemische Beständigkeit zu erhöhen, diese wird jedoch von Fluorgas angegriffen. Fäden aus Platin-RhodiumLegierungen zeigen hohe Resistenz gegenüber Chemikalien, die bei der Halbleiterherstellung verwendet werden, sind jedoch sehr spröde und können leicht mechanisch zerstört werden. Die WO-A-2006/010884 schlägt daher eine Legierung aus Platin/Iridium vor, Alle diese beschichteten Drähte oder Drähte aus Sondermaterialien sind aufwendig, teuer und häufig mechanisch sehr empfindlich.

Durch die zuvor beschriebene Materialwahl für den Heizfaden lassen sich im übrigen Ablagerungen auf dem Heizfaden meist nicht vermeiden.

Generell sind diese Wänneleitungs-Gasdruckmeßanordnungen mit entsprechenden Heizfäden gegenüber raschen Druckändenungen sehr empfindlich. Ein Druckstoß in der Umgebungsatmospäre oder eine stärkere Gasströmung wie sie bei einem schnellen Belüften einer Vakuumapparatur ohne weiteres auftreten kann, kann zum Reißen des Heizfadens führen. Ein Reißen des Heizfadens kann ebenfalls bei Vibrationen auftreten.

Die zuvor aufgezeigte Problematik eines ungeschützten Heizfadens ist gelöst bei einer Wärmeleitungs-Gasdruckmeßanordnung, bei der das Heiz-/Meßelement mit einer gasdichten Schutzhülle aus feuerfestem Glas derart vollständig umhüllt ist, daß es mit dem Gasvolumen, dessen Druck zu messen ist, nicht in Kontakt komme (US-A-1,768,415). Bei der gasdichten Schutzhülle handelt es sich hier um ein feuerfestes Glas, das den Heizdraht mit etwas Abstand umgibt. Der Innenraum der Glashülse ist mit einem Inertgas gefüllt, so daß die Oberfläche des Heizleiters nicht angegriffen wird.

Mit dieser Wärmeleitungs-Gasdruckmeßanordnung sind die Probleme von Ablagerungen auf dem Heizfaden und die Probleme der Empfindlichkeit gegenüber Druckstößen in der Umgebungsatmosphäre beseitigt. Allerdings ist die konstruktive Gestaltung der Schutzhülle recht aufwendig. Die Schutzhülle bricht auch relativ leicht,

Der Lehre der Erfindung liegt daher das Problem zugrunde, die zuvor erläuterte, bekannte Wärmeleitungs-Gasdrucknießanordnung hinsichtlich ihrer mechanischwkonstruktiven Belastbarkeit zu verbessern.

Das zuvor aufgezeigte Problem ist bei einer Wärmeleitungs-Gasdruckmeßanordnung mit den Merkmalen des Oberbegriffs von Anspruch 1 durch die Merkmale des kennzeichnenden Teils von Anspruch 1 gelöst. Bevorzugte Ausgestaltungen und Weiterbildungen sind Gegenstand der Unteransprüche.

Im folgenden wird zur Vereinfachung stets nur von einem kombinierten elektrischen Heiz-/Meßelement oder auch lediglich vom Heiz-/Meßelement gesprochen. Das deckt auch Konstruktionen ab, bei denen das Heizelement und das Meßelement voneinander getrennte Bauteile sind.

Mit der erfindungsgemäß aufgebauten Wärmeleitungs-Gasdruckmeßanordnung erreicht man wie bereits mit der bekannten Anordnung auch unter ungünstigen chemischen Umgebungsbedingungen eine hohe Lebensdauer. Eine nur geringe Verfälschung des Meßsignals ist sichergestellt. Gleichzeitig ergibt sich eine hohe zeitliche Dynamik und ein großer Meßbereich. Weder aggressive Gase noch Dämpfe, die zu leitfähigem Kondensat oder Ablagerungen auf einem metallischen Heizelement führen können, sind für die erfindungsgemä-Be Wärmeleitungs-Gasdruckmeßanordnung ein Problem. Zudem hat die erfindungsgemäße Wämeleitungs-Gasdruchmeßanordnung eine hohe mechanische Stabilität, so daß das Heiz-/Meßelement auch mechanische Belastungen und Belastungen durch starke Gasströmungen aushalten kann.

Die gasdichte Schutzschicht oder -hülle erfüllt auch hier mehrere Funktionen:

Sie schützt das Heiz-/Meßelement im Inneren vor ggf. aggressiven Gasen und Dämpfen in der Meßkammer.

Weiterhin stellt die Schutzschicht oder -hülle eine chemisch inerte Oberfläche dar und verringert dadurch die Möglichkeit zur Bildung von Ablagerungen. Falls sich doch Ablagerungen bilden, so haben sie keinen Einfluß auf den Widerstand und den Temperaturkoeffizienten des Heiz-/Meßelements, da mögliche elektrisch leitfähige Ablagerungen durch die isolierende Schutzschicht oder -hülle vom Heiz-/Meßelement elektrisch getrennt sind. Auch der Wärmeübergang in das Gas wird durch eventuelle Ablagerungen sehr viel geringer beeinflußt als bei bekannten Anordnungen nach dem Stand der Technik, da der typische Durchmesser der Gesamtanordnung sehr viel größer (typisch Faktor 5 bis 100) als der typische Durchmesser des Heiz-/Meßelements ist. Damit ist auch der relative Einfluß von Ablagerungen geringer.

Zudem kann die elektrisch isolierende Schutzschicht oder -hülle mechanisch so stabil ausgebildet werden, daß das Heiz-/Meßelement abgestützt wird. Dies verbessert die mechanische Stabilität des Gesamtsystems aus Heiz-/Meßelement und Schutzschicht oder -hülle beispielsweise gegenüber Vibrationen erheblich. Bevorzugt ist die mechanische Stabilität des Gesamtsystems so hoch, daß auf eine weitere Abstützung des Heiz-/Meßelements auf der von den elektrischen Anschlüssen abgewandten Seite verzichtet werden kann. Zudem ist das filigrane Heiz-/Meßelement nicht mehr direkt dem umgebenden Gas und dessen Strömung ausgesetzt, so daß die Gesamtanordnung deutlich stabiler gegenüber schnellen Gasströmungen o. ä, wird.

Bei allen Ausführungen ist es wichtig, daß die thermischen Ausdehnungskoeffizienten von Heiz-/Meßelement und Schutzschicht oder -hülle so aufeinander abgestimmt sind, daß beim Heizen keine mechanischen Spannungen entstehen, die das Gesamtelement schädigen können. Gleichzeitig darf die Schutzschicht oder -hülle nicht zu dick und deren Wärmeleitfähigkeit nicht zu klein sein, um das Gesamtsystem nicht zu träge werden zu lassen. Die genauen Anforderungen an die Schutzschicht oder -hülle ergeben sich aus den jeweiligen Anforderungen an die Zeitkonstante des Meßsystems.

Das erfindungsgemäß als Schutzhülle verwendete Röhrchen aus einem Keramikmaterial erfüllt die voranstehenden Ausführungen besonders gut. Es ist erfindungsgemäß mit einem thermisch leitfähigen Vergußmaterial gasdicht verschlossen.

Die mechanische Steifigkeit der Gesamtanordnung wird dabei dann besonders positiv beeinflußt, wenn der das Heiz-/Meßelement bildende Metalldraht auf einem Träger aufgewickelt ist. In jedem Fall ist eine ausreichend hohe Wärmeleitfähigkeit des Keramikmaterials und des keramischen Vergußmaterials gefordert,

Ist das Heizelement vom Meßelement getrennt, so ist das Röhrchen aus einem Keramikmaterial um beide herum angeordnet.

Eine Ausführung des Heiz-/Meßelementes aus Platin oder Nickel oder einer Legierung eines oder beider Metalle hat sich in der Praxis besonders bewährt.

Im übrigen gelten für die schaltungstechnische Gesamtanordnung die Vorschläge zu Wheatstone-Brückenschaltungen etc., die sich aus dem Stand der Technik ergeben (WO-A-20061410884; WO-A-99/15569).

Es hat sich gezeigt, daß die erfindungsgemäße Wärmeleitungs-Gasdruckmeßeinordnung chemisch und mechanisch sehr stabil ist und gleichzeitig - bei geeigneter Dimensionierung der Komponenten - das Meßsystern eine hohe Dynamik (Ansprechzeitkonstante der Größenordnung 0,1 - 1,0 s) und einen gro-βen nutzbaren Meßbereich (typischerweise von < 0,001 mbar bis ca. 1000 mbar) aufweist.

Im einzelnen wird die Erfindung nachfolgend anhand einer lediglich ein Ausführungsbeispiel darstellenden Zeichnung näher erläutert. In der Zeichnung zeigt
- Fig. 1: ein Ausführungsbeispiel einer erfindungsgemäßen Wärmeleitungs-Gasdruckmeßanordnung und
- Fig. 2: ein Beispiel einer Wärmeleitungs-Gasdruckmeßanordnung gemäß dem Stand der Technik.

Die in Fig. 1 dargestellte erfindungsgemäße Wänneleitungs-Gasdruckmeßanordnung zeigt ein kombiniertes elektrisches Heiz-/Meßelement 1. Dieses ist an einer ein strukturgebendes Bauteil 3 bildenden Grundplatte befestigt, die im dargestellten Ausführungsbeispiel Teil eines Gehäuses 4 ist, das eine Meßkammer 5 bildet, in der der Gasdruck des darin befindlichen Gases zu messen ist und in der sich das Heiz-/Meßelement 1 befindet.

Im dargestellten Ausführungsbeispiel ist nun vorgesehen, daß das kombinierte elektrischen Heiz-/Melielement 1 mit einer gasdichten Schutzschicht oder -hülle 6 aus einem elektrisch isolierenden Werkstoff mit hoher Wärmeleitfähigkeit derart vollständig umhüllt ist, daß es mit dem Gas in der Meßkammer 5 nicht in Kontakt kommt. Im dargestellten und bevorzugten Ausführungsbeispiel erstreckt sich die Schutzschicht oder -hülle 6 bis zum strukturgebenden Bauteil 3 und ist daran befestigt. Dort treten zwei Anschlußleitungen 1' aus, die möglichst dünn sind, so daß wenig Wärme abgeführt wird.

Im Ausführungsbeispiel ist der Werkstoff mit hoher Wäzmeleitfähigkeit der Schutzschicht oder -hülle 6 ein Keramikmaterial.

Das dargestellte und bevorzugte Ausführungsbeispiel zeigt dabei, daß die Schutzschicht oder -hülle 6 derart mechanisch belastbar ausgeführt und/oder mechanisch belastbar an einem strukturgebenden Bauteil 3 der Meßanordnung angebracht ist, daß sie gleichzeitig die alleinige mechanische Halterung des Heizelementes und des Meßelementes bzw. des kombinierten elektrischen Heiz-/Meßelementes 1 bildet.

Bei dem hier vorgestellten Ausführungsbeispiel ist vorgesehen, daß das kombinierte elektrische Heiz-/Meßelement 1 als Metalldraht und die Schutzschicht oder -hülle 6 als den Metalldraht umhüllendes Röhrchen aus einem Keramikmaterial ausgeführt ist. Man erkennt dabei in Fig. 1 ferner, daß hier der das Heiz-/Meßelement 1 bildende Metalldraht auf einem Träger 7 aufgewickelt ist.

Zur Herstellung dieser Anordnungen wird der das kombinierte Heiz-/Meßelement 1 bildende filigrane Metalldraht auf den stabartigen, vorzugsweise auch aus keramischem Material bestehenden Träger 7 aufgewickelt. Dieser Wickel wird in ein größeres, dünnwandiges Röhrchen aus Keramikmaterial geschoben, das in diesem Fall die Schutzhülle 6 bildet. Diese Anordnung wird dann mit einem thermisch leitfähigen keramischen Vergußmaterial, beispielsweise einem Zement, gasdicht verschlossen.

Die zuvor erläuterte Einheit ist auf der das strukturgebende Bauteil 3 bildenden Grundplatte des Gehäuses 4 angebracht. Die mechanische Befestigung der Schutzhülle 6 kann im dargestellten Ausführungsbeispiel durch ein wärmeisolierendes Kunststoffmaterial erfolgen. Aufgrund einer langsameren Aufbeizrate und der insgesamt gegebenen größeren thermischen Trägheit des aufgrund der aus Keramikmaterial bestehenden Schutzhülle 6 massiveren Heiz-/Meßelementes 1 würde eine ungeregelte Wheatstone-Brückenschaltung zu einer zu hohen Trägheit bei der Messung fuhren, Bevorzugt ist daher für die vorliegende Wänneleitungs-Gasdruckmeßanordnung die Einbindung in eine geregelte Wheatstone-Brückensohaltung (s. den weiter oben erläuterten Stand der Technik). Auch Impulsverfahren wie in der DE-A-101 15 715 sind möglich.

In einer geregelten Wheatstone-Brückenschaltung kann ein auf Basis einer Platinverbindung ausgeführtes Heiz-/Meßelement 1 zur Temperaturkompensation mit einem weiteren Platin-Element zusammen eingesetzt werden. Platin-Temperaturfühler sind Standardprodukte (beispielsweise PT 100 - Temperaturfühler), die kostengünstig erhältlich sind.

Eine erfindungsgemäße Wänneleitungs-Gasdruckmeßanordnung kann man in Verbindung mit einem oder mehreren anderen Sensoren einsetzen, um den Meßbereich einer Gesamtanordnung zu erweitern. Aufgrund deren hohen chemischen Beständigkeit ist insbesondere eine Kombination mit keramischen Drückaufhehmern für den absoluten Druck vorteilhaft, wenn man hochpräzise Messungen im Grobvakuumbereich oder bei noch höheren Drücken durchführen möchte.

## Patentansprüche

1. Wärmeleitungs-Gasdruckmeßanordnung
mit einer Meßkammer (5), in der sich das Gas befindet, dessen Gasdruck gemessen werden soll, und
mit einem elektrisch leitenden Heizelement und einem elektrischen Meßelement in der Meßkammer (5), wobei das elektrisch leitende Heizelement und das vom Heizelement getrennte elektrische Meßelement gemeinsam mit einer gasdichten Schutzhülle (6) aus einem elektrisch isolierenden Werkstoff mit hoher Wärmeleitfähigkeit derart vollständige umhüllt sind, daß sie mit dem Gas nicht in Kontakt kommen, oder
mit einem kombinierten elektrischen Heiz-/Meßelement (1) in der Meßkammer (5), wobei das kombinierte elektrische Heiz-/Meßelement (1) als Metalldraht ausgeführt ist und mit einer gasdichten Schutzhülle (6) aus einem elektrisch isolierenden Werkstoff mit hoher Wärmeleitfähigkeit derart vollständig urnhüllt ist, daß es mit dem Gas nicht in Kontakt kommt,
**dadurch gekennzeichnet,**
**daß** die Schutzhülle (6) als Röhrchen aus einem Keramikmaterial ausgeführt und mit einem thermisch leitiahigen Vergußmaterial gasdicht verschlossen ist.

2. Wärmeleitungs-Gasdruckmeßanordnung nach Anspruch 1, **dadurch gekennzeichnet,**
**daß** das thermisch leitfähige Vergußmaterial ein keramisches Vergußmaterial ist .

3. Meßanordnung nach Anspruch 1 oder 2, **dadurch gekennzeichnet,**
**daß** die Schutzhülle (6) derart mechanisch belastbar ausgeführt und/oder mechanisch belastbar an einem strukturgebenden Bauteil (3) der Meßanordnung angebracht ist, daß sie gleichzeitig die alleinige mechanische Halterung des Heizelementes und des Meßelementes bzw. des kombinierten elektrischen Heiz-/Meßelementes (1) bildet.

4. Meßanordnung nach einem der Ansprüche 1 bis 3, **dadurch gekennzeichnet,**
**daß** der das Heiz-/Meßelement (1) bildende Metalldraht auf einem Träger (7) aufgewickelt ist.

5. Meßanordnung nach einem der Ansprüche 1 bis 4, **gekennzeichnet durch** einen oder mehrere andere Sensoren zur Erweiterung des Meßbereichs der Gesamtanordnung.

## Claims

1. Heat conducting gas pressure measurement arrangement,
with a measurement chamber (5) in which the gas, the gas pressure of which is to be measured, is located, and
with an electrically conducting heating element and an electrical measuring element in the measurement chamber (5), the electrically conducting heating element and the electrical measuring element separated from the heating element being completely sheathed jointly with a gas-tight protective sheath (6) made from an electrically insulating material having high heat conductivity, in such a way that they do not come into contact with the gas, or
with a combined electrical heating/measuring element (1) in the measurement chamber (5), the combined electrical heating/measuring element (1) being implemented as a metal wire and being completely sheathed with a gas-tight protective sheath (6) made from an electrically insulating material having high heat conductivity, in such a way that the said combined electrical heating/measuring element does not come into contact with the gas,
**characterized**
**in that** the protective sheath (6) is implemented as a tubelet made from a ceramic material and is closed, gas-tight, by means of a thermally conductive sealing material.

2. Heat conducting gas pressure measurement arrangement according to Claim 1, **characterized in that** the thermally conductive sealing material is a ceramic sealing material.

3. Measurement arrangement according to Claim 1 or 2, **characterized in that** the protective sheath (6) is designed to be mechanically loadable and/or is attached mechanically loadably to a structure-imparting component (3) of the measurement arrangement, in such a way that the said protective sheath at the same time forms the sole mechanical means for holding the heating element and the measuring element or the combined electrical heating/measuring element (1).

4. Measurement arrangement according to one of Claims 1 to 3, **characterized in that** the metal wire forming the heating/measuring element (1) is wound on a carrier (7).

5. Measurement arrangement according to one of Claims 1 to 4, **characterized by** one or more other sensors for extending the measurement range of the overall arrangement.

## Revendications

1. Dispositif de mesure de pression de gaz par conduction thermique comprenant :
une chambre de mesure (5) dans laquelle se trouve le gaz dont la pression doit être mesurée ; et
un élément chauffant électriquement conducteur et un élément de mesure électrique placés dans la chambre de mesure (5), l'élément chauffant électriquement conducteur et l'élément de mesure électrique séparé de l'élément chauffant étant entièrement enveloppées ensemble dans une gaine de protection (6) étanche aux gaz en matériau électriquement isolant à forte conductivité thermique de telle sorte que l'élément n'entre pas en contact avec le gaz ;
un élément de chauffage/mesure (1) électrique combiné placé dans la chambre de mesure (5), l'élément de chauffage/mesure (1) électrique combiné prenant la forme d'un fil métallique et étant entièrement enveloppé dans une gaine de protection (6) étanche aux gaz en matériau électriquement isolant à forte conductivité thermique de telle sorte que l'élément n'entre pas en contact avec le gaz ;
**caractérisé en ce que** :
la gaine de protection (6) prend la forme d'un fin tube en matière céramique et est fermée de façon étanche aux gaz par le biais d'un matériau d'encapsulage thermiquement conducteur.

2. Dispositif de mesure de pression de gaz par conduction thermique selon la revendication 1, **caractérisé en ce que** le matériau d'encapsulage thermiquement conducteur est un matériau d'encapsulage céramique.

3. Dispositif de mesure selon la revendication 1 ou 2, **caractérisé en ce que** la gaine de protection (6) est configurée de façon à pouvoir être chargée de telle sorte sur le plan mécanique et/ou à pouvoir être placée sur un composant (3) structurel du dispositif de mesure de façon à pouvoir être chargée sur le plan mécanique, qu'il forme simultanément le support mécanique unique de l'élément chauffant et de l'élément de mesure et/ou de l'élément élément de chauffage/mesure (1) électrique combiné.

4. Dispositif de mesure selon l'une quelconque des revendications 1 à 3, **caractérisé en ce que** le fil métallique formant l'élément de chauffage/mesure (1) est enroulé sur un support (7).

5. Dispositif de mesure selon l'une quelconque des revendications 1 à 4, **caractérisé par** la présence d'un ou de plusieurs capteurs supplémentaires permettant d'élargir la zone de mesure du dispositif global.
